# EUROPÄISCHE PATENTANMELDUNG

(11) **EP 1 280 259 A1**
(43) Veröffentlichungstag der Anmeldung: **29.01.2003**
(21) Anmeldenummer: 02405594.9
(22) Anmeldetag: 12.07.2002
(51) Int. Cl.: H02K 19/36, H02H 7/06

(54) **Generator zur Erzeugung hoher Spannungen**

(30) Priorität: 23.07.2001 CH 13652001
(71) Anmelder: ALSTOM (Switzerland) Ltd, 5401 Baden (CH)
(72) Erfinder: Blatter, Richard, 5408 Ennetbaden (CH); Reinhard, Joho, 5022 Rombach (CH); Lindahl, Sture, 723 35 Västeras (SE); Sörensen, Erland, 723 55 Västeras (SE)

(57) **Zusammenfassung**

Ein Generator zur Erzeugung hoher Spannungen mit wenigstens einer Generatorwicklung (12) ist über eine Generatorschaltung (10) an ein Netz (19) angeschlossen, die Mittel (15,..,17) zum Schutz gegen Ueberspannungen umfasst. Ein verbesserter Schutz bei höheren Spannungen wird dadurch erreicht, dass die wenigstens eine Generatorwicklung (12) in eine Mehrzahl von Wicklungsabschnitten (12a-c) unterteilt ist, welche hinsichtlich der Isolationsbemessung ihrer Wicklungsisolation abgestuft ausgebildet sind, und dass die Ueberspannungsschutzmittel eine Mehrzahl von Ueberspannungsschutzelementen (15,..17) umfassen, die jeweils den einzelnen Wicklungsabschnitten (12a-c) zugeordnet sind und in ihrem Ansprechniveau an die Anforderungen des zugehörigen Wicklungsabschnittes angepasst sind.

## Beschreibung

### TECHNISCHES GEBIET

Die vorliegende Erfindung bezieht sich auf das Gebiet der Stromerzeugung. Sie betrifft einen Generator zur Erzeugung hoher Spannungen gemäss dem Oberbegriff des Anspruchs 1.

### STAND DER TECHNIK

Der Schutz gegen externe Ueberspannungen bei Generatoren geschieht üblicherweise mittels eines Satzes von Ueberspannungsableitern, welche an den phasenseitigen Generatorklemmen angeschlossen sind. Da die zu schützende Generatorwicklung von den Generatorklemmen bis hinunter zum Generatornullpunkt ein homogenes Isolationsniveau aufweist, erfüllt diese Art der Ueberspannungsbegrenzung die von der Wicklungsisolation gestellten Anforderungen.

Es gibt nun Generatoren, die höhere Spannungen erzeugen als die üblicherweise gewählten Werte, die im Bereich von 10 bis 25 kV liegen. Beispiel für einen solchen Generator ist ein unter dem Namen "Powerformer" bekannt gewordener Generatortyp, der Spannungen von mehr als 30 kV erzeugt und ohne Aufwärtstransformator direkt ans Netz angeschlossen werden kann (siehe z.B. den Artikel von M. Lejion et al., Breaking Conventions in Electrical Power Plants, No. 11/37-03, CIGRÉ (Session 1998)).

Bei derartigen Generatoren kann ein technisches und kommerzielles Interesse bestehen, die Wicklungsisolation der Generatorwicklung abgestuft auszuführen, d.h., an der üblicherweise im Stern geschalteten Wicklung nullpunktseitig eine reduzierte Isolationsspannung zu wählen. Eine derart abgestufte Wicklungsisolation kann jedoch unter gewissen Umständen zur Ueberhöhung von Stossspannungen führen. Solche Stossspannungen werden durch Blitzeinschläge oder Schalthandlungen im Netz erzeugt und enthalten Frequenzanteile, welche beträchtlich über der Betriebsfrequenz liegen.

### DARSTELLUNG DER ERFINDUNG

Es ist daher Aufgabe der Erfindung, einen Generator zu schaffen, der bei hoher Zuverlässigkeit im Hinblick auf den Ueberspannungsschutz eine abgestufte Ausführung der Wicklungsisolation der Generatorwicklung ermöglicht.

Die Aufgabe wird durch die Gesamtheit der Merkmale des Anspruchs 1 gelöst. Der Kern der Erfindung besteht darin, dass die Generatorwicklung in eine Mehrzahl von Wicklungsabschnitten unterteilt ist, welche hinsichtlich der Isolationsspannung ihrer Wicklungsisolation abgestuft ausgebildet sind, und dass eine Mehrzahl von Ueberspannungsschutzelementen vorgesehen ist, die jeweils den einzelnen Wicklungsabschnitten zugeordnet sind und in ihrem Ansprechniveau an die Anforderungen des zugehörigen Wicklungsabschnittes angepasst sind. Hierdurch ist trotz unterschiedlicher Isolationsspannungen der einzelnen Wicklungsabschnitte auf einfache Weise ein optimaler Ueberspannungsschutz aller Wicklungsabschnitte gewährleistet.

Bevorzugt sind dabei erste Ueberspannungsschutzelemente an den Verbindungsstellen zwischen den Wicklungsabschnitten und zweite Ueberspannungsschutzelemente am auf Hochspannungspotential liegenden Ende der Generatorwicklung angeschlossen.

Gemäss einer bevorzugten Ausgestaltung der Erfindung ist die wenigstens eine Generatorwicklung in n (n ≥ 2) Wicklungsabschnitte ungefähr gleicher Grösse unterteilt, sind n Ueberspannungsschutzelemente vorgesehen, und weisen die n Ueberspannungsschutzelemente ein entsprechend abgestuftes Ansprechniveau auf.

Gemäss einer anderen bevorzugten Ausgestaltung der Erfindung sind mehrere Generatorwicklungen in einem ungeerdeten Sternpunkt zusammengeschaltet, ist jede der Generatorwicklungen in Wicklungsabschnitte unterteilt, ist jedem der Wicklungsabschnitte ein angepasstes Ueberspannungsschutzelement zugeordnet, und ist an den Sternpunkt ein weiteres Ueberspannungsschutzelement angeschlossen.

Bevorzugt sind die Ueberspannungsschutzelemente als Ueberspannungsableiter ausgebildet und über eine integrierte Kabelkupplung an den zugehörigen Wicklungsabschnitt angeschlossen.

Generell ist es zweckmässig, wenn der Generator ein zylinderförmiges Gehäuse aufweist, und die Ueberspannungsschutzelemente in einer separaten Ableiterbox oberhalb des Gehäuses untergebracht sind.

Bei Generatoren kleiner Leistung ist es dagegen einfacher, wenn der Generator ein rechteckiges Rahmengehäuse aufweist, und die Ueberspannungsschutzelemente in einem Ueberspannungsschutzelementmodul zusammengefasst und in dem Rahmengehäuse untergebracht sind.

Es ist aber, insbesondere bei grossen Generatoren, auch denkbar, dass die Ueberspannungsschutzelemente in einem separaten Anbau neben dem Generator untergebracht sind.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: eine Generatorschaltung gemäss einem ersten bevorzugten Ausführungsbeispiel der Erfindung, bei der jede geerdete Generatorwicklung eines Dreiphasensystems in drei abgestuft isolierte Wicklungsabschnitte unterteilt und die einzelnen Abschnitte durch zugeordnete Ueberspannungsschutzelemente abgesichert sind;
- Fig. 2: in einer zu Fig. 1 analogen Darstellung eine Generatorschaltung gemäss einem zweiten bevorzugten Ausführungsbeispiel der Erfindung, bei der drei an einem ungeerdeten Sternpunkt zusammengeschaltete Generatorwicklungen jeweils in drei Wicklungsabschnitte unterteilt und die einzelnen Abschnitte durch Ueberspannungsschutzelemente abgesichert sind;
- Fig. 3: ein Ausführungsbeispiel für ein im Rahmen der Erfindung einsetzbares Ueberspannungsschutzelement in Form eines Ueberspannungsableiters mit integrierter Kabelendmuffe;
- Fig. 4: einen zu Fig. 3 vergleichbaren Ueberspannungsableiter mit KabelDoppelanschluss (im Längsschnitt von oben gesehen);
- Fig. 5: den Ueberspannungsableiter aus Fig. 4 im Längsschnitt von der Seite gesehen;
- Fig. 6: ein bevorzugtes Ausführungsbeispiel eines Generators nach der Erfindung mit oberhalb des Gehäuses aufgebauter Ueberspannungsschutzeinrichtung (in der Draufsicht von oben);
- Fig. 7: den Generator nach Fig. 6 in Richtung der Generatorachse gesehen;
- Fig. 8: im Längsschnitt einen Generator kleiner Leistung nach der Erfindung mit ins Gehäuse integriertem Ueberspannungsschutzelementmodul; und
- Fig. 9: in perspektivischer Ansicht einen Generator nach der Erfindung mit in einem separaten Anbau untergebrachter Ueberspannungsschutzeinrichtung.

### WEGE ZUR AUSFÜHRUNG DER ERFINDUNG

Wie bereits erwähnt, besteht das Wesen der Erfindung darin, die Generatorwicklung in einzelne Wicklungsabschnitte unterschiedlicher Spannungsbemessung der Wicklungsisolation zu unterteilen und sie an den Verbindungsstellen der Abschnitte mittels Ueberspannungsschutzelementen (z.B. Funkenstrecken, Ableiter oder dgl.) so zu schützen, dass das Ansprechniveau dieser Schutzelemente den zulässigen Anforderungen des nachgeschalteten Wicklungsabschnittes entspricht.

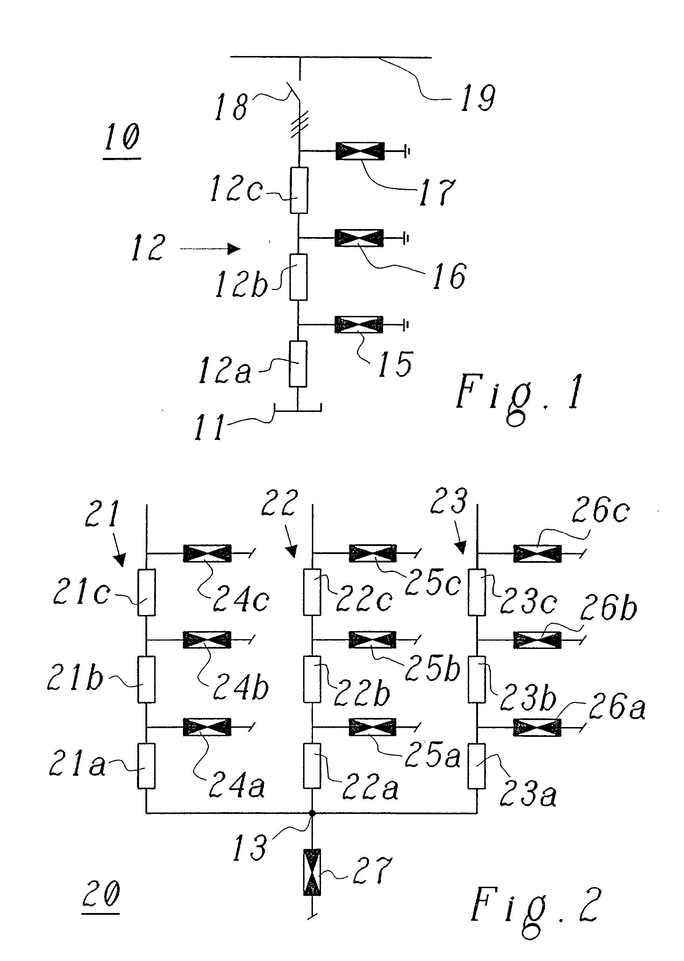

Ein erstes Ausführungsbeispiel für eine derartige Generatorschaltung ist in Fig. 1 dargestellt: In der Generatorschaltung 10 ist jede der Generatorwicklungen 12 eines Dreiphasensystems mit dem einen Ende an einen Nullpunkt 11 angeschlossen und mit dem anderen Ende über einen Generatorschalter 18 an ein Netz 19 anschliessbar. Die Generatorwicklung 12 ist in (bei diesem Beispiel) drei gleichartige Wicklungsabschnitte 12a, 12b und 12c unterteilt, die eine in der Isolationsspannung abgestufte Wicklungsisolation aufweisen. Die Netzspannung beträgt beispielsweise 150 kV, während der Schutzpegel auf insgesamt 450 kV liegt. Jedem der drei Wicklungsabschnitte 12a-c ist ein eigenes Ueberspannungsschutzelement 15, 16, 17 zugeordnet, dessen Ansprechniveau sich innerhalb einer aufsteigenden Reihe von dem vorhergehenden jeweils um 1/3 des Schutzpegels, d.h. 150 kV, unterscheidet. Das Ueberspannungsschutzelement 15 hat also ein Ansprechniveau von 150 kV, das Ueberspannungsschutzelement 16 hat ein Ansprechniveau von 300 kV, und das Ueberspannungsschutzelement 17 hat ein Ansprechniveau von 450 kV. Der in unmittelbarer Nähe des Nullpunkts 11 gelegene Wicklungsabschnitt 12a, der die geringste Isolationsbemessung aufweist, wird daher bereits bei Spannungen oberhalb 150 kV geschützt, der nächsthöhere, besser isolierte Wicklungsabschnitt 12b bei Spannungen oberhalb 300kV, und der letzte, am besten isolierte Wicklungsabschnitt 12c bei Spannungen oberhalb 450 kV. Im verallgemeinerten Fall von n gleichartigen Wicklungsabschnitten steigt das Ansprechniveau der n Ueberspannungsschutzelemente in der vom Nullpunkt ausgehenden Reihe jeweils in Stufen von 1/n des gesamthaften Schutzpegels der Wicklung.

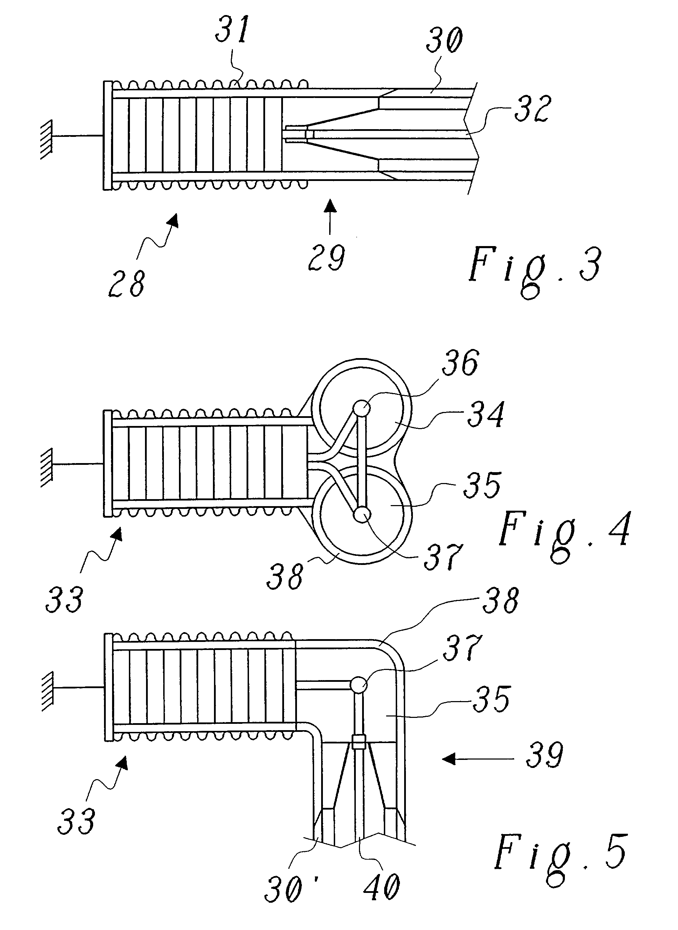

In Fig. 2 ist ein zweites Ausführungsbeispiel für eine Generatorschaltung nach der Erfindung dargestellt: Innerhalb dieser Generatorschaltung 20 sind drei Generatorwicklungen 21, 22 und 23 an einem gemeinsamen, ungeerdeten Sternpunkt 13 zusammengeführt. Jede der drei Generatorwicklungen 21, 22 und 23 ist in drei gleichartige Wicklungsabschnitte 21a-c, 22a-c und 23a-c unterteilt. Auch hier ist jedem der Wicklungsabschnitte 21a-23c ein eigenes Ueberspannungsschutzelement 24a-c bzw. 25a.c bzw. 26a-c zugeordnet. Zusätzlich ist am Sternpunkt ein weiteres Ueberspannungsschutzelement 27 angeschlossen. Die Ansprechniveaus der zu einer Generatorwicklung gehörenden Ueberspannungsschutzelemente 24a-c bzw. 25a-c bzw. 26a-c steigen innerhalb der vom Sternpunkt 13 ausgehenden Reihe - wie beim Ausführungsbeispiel der Fig. 1 - jeweils in Stufen von 1/3 (allgemein: 1/n) des Schutzpegels für die Wicklung insgesamt. Die absoluten Ansprechniveaus der einzelnen Ueberspannungsschutzelemente liegen jedoch um einen festen Betrag höher, der dem Ansprechniveau des am Sternpunkt 13 angeschlossenen Ueberspannungsschutzelements 27 entspricht.

Die in den Generatorschaltungen 10, 20 eingesetzten Ueberspannungsschutzelemente können als Ueberspannungsableiter die in Fig. 3-5 wiedergegebenen Formen haben, bei denen z.B. ein Stapel von tablettenförmigen Metalloxidvaristoren in einem Isoliergehäuse untergebracht ist. Der Ueberspannungsableiter 28 der Fig. 3, bei dem der Tablettenstapel von einem halbleitenden Belag 31 umgeben ist, hat eine integrierte Kabelkupplung 29, mittels der er auf einfache Weise über ein angeschlossenes Kabel 30 mit einem isolierten Innenleiter 32 an den jeweiligen Wicklungsabschnitt angeschlossen werden kann. Beim Ueberspannungsableiter 33 der Fig. 4 und 5 sind zwei Kabelanschlüsse 34 und 35 mit jeweils einer Kabelkupplung 39 vorgesehen, deren Innenleiter 36, 37 mit den entsprechenden Innenleitern 40 der angeschlossenen Kabel 30' verbunden werden. Auch die Kabelanschlüsse 34, 35 sind aussen mit einem halbleitenden Belag 38 versehen. Die Kabelkupplungen 29, 39 und die Ueberspannungsableiter können insbesondere als Einzelkomponenten montiert und durch luftisolierte Verbindungselemente zusammengeschlossen sein.

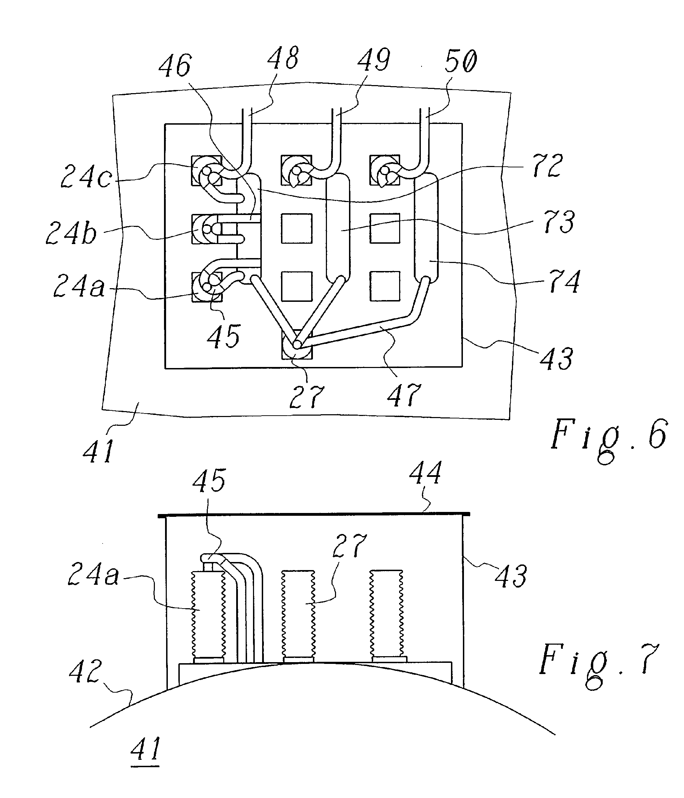

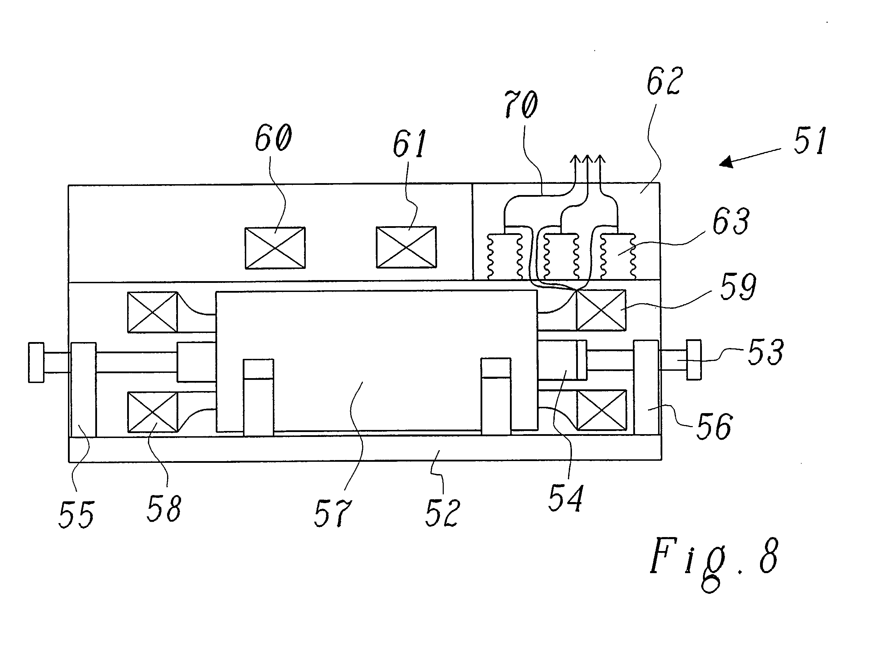

Derartige Ueberspannungsschutzelemente mit Kabel-Doppelanschluss, wie sie in Fig. 4 und 5 dargestellt sind, sind im Ausführungsbeispiel eines erfindungsgemässen Generators gemäss Fig. 6 und 7 eingesetzt. Der Generator 41 hat ein zylinderförmiges Gehäuse 42. Die Generatorwicklungen sind von oben durch Oeffnungen 72,..,74 im Gehäuse 42 zugänglich. Oben auf dem Gehäuse 42 ist im Bereich der Oeffnungen 72,..,74 eine durch einen Deckel 44 verschliessbare Ableiterbox 43 angeordnet, in der - gemäss Fig. 2 - die Ueberspannungsschutzelemente 24a-c, 25a-c und 26a-c, sowie das an den Sternpunkt angeschlossene Ueberspannungsschutzelement 27, stehend untergebracht sind. Jedes der Ueberspannungsschutzelemente 24a-26c hat einen Doppel-Kabelanschluss mit entsprechenden Kabelmuffen 45 gemäss Fig. 4 und 5. Die Ueberspannungsschutzelemente 24a,b, 25a,b und 26a,b sind jeweils über zwei Kabel 46 mit benachbarten Wicklungsabschnitten der zugehörigen Generatorwicklung verbunden, während die Ueberspannungsschutzelemente 24c, 25c und 26c einerseits mit dem auf hohem Potential liegenden Ende der Generatorwicklungen und andererseits mit den Generatorableitungen 48, 49 und 50 des Generators 41 verbunden sind. Die anderen Enden der Generatorwicklungen sind über weitere Kabel 47 sternpunktartig mit dem Ueberspannungsschutzelement 27 verbunden. Die vollständige Verkabelung ist der Einfachheit halber in Fig. 6 nur für die Ueberspannungsschutzelemente 24a-c und 27 und in Fig. 7 nur für das Ueberspannungsschutzelement 24a dargestellt.

Bei einer Konfiguration des Generators 42 gemäss Fig. 6 und 7 kann - wenn wegen Raumnot (Transportprofil) die Ableiterbox 43 erst am Montageort aufgebaut werden kann - der Vorrat an (einzeln getesteten) Kabeln 46, 47 zunächst beim Transport geschützt innerhalb des Gehäuses 42 untergebracht sein.

Eine andere Möglichkeit ergibt sich bei einem Generator 51 für kleine Leistungen gemäss Fig. 8. Der Generator 51 umfasst in an sich bekannter Weise eine in zwei Lagerböcken 55, 56 gelagerte Welle 53 mit dem Rotor 54. Den Rotor 54 umgibt ein Stator 57 mit der zwei Wickelköpfe 58, 59 aufweisenden Statorwicklung. Weiterhin sind für die Kühlung zwei Kühler 60, 61 vorgesehen. Alle Teile sind in einem kompakten (rechteckigen) Rahmengehäuse 52 untergebracht. Bei diesem Generator 51 ist ein in das Rahmengehäuse 52 integriertes, vorverdrahtetes Ueberspannungsschutzelementmodul 62 vorgesehen, dessen Ueberspannungsschutzelement 63 mittels entsprechender (in Fig. 8 schematisch eingezeichneter) Kabel 70 mit der Statorwicklung bzw. deren Wicklungsabschnitten verbunden sind. Ein solcher kompakter, vorverdrahteter Generator 51 kann komplett auf einem Tiefgangwagen transportiert werden.

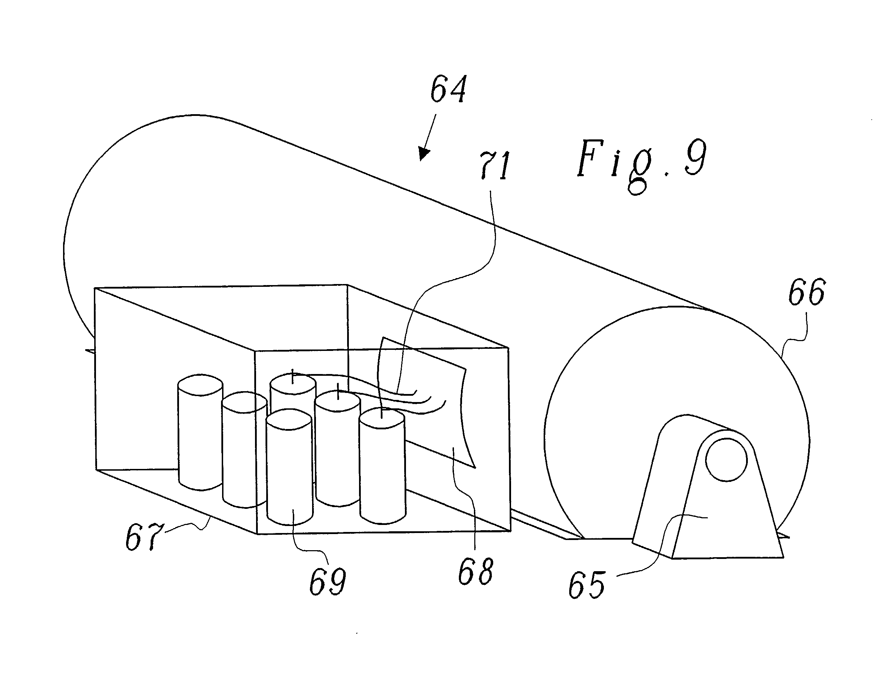

Eine andere Möglichkeit, die Generatorschaltung zu konfigurieren, ist in Fig. 9 dargestellt. Der Generator 64 mit dem Gehäuse 66 und den Lagerböcken 65 ist hier separat von der Ueberspannungsschutzeinrichtung aufgebaut, deren (stilisiert dargestellte) Ueberspannungsschutzelemente 69 in einem eigenständigen Anbau 67 untergebracht sind. Die Ueberspannungsschutzelemente 69 sind in einer der in Fig. 1 oder 2 dargestellten Arten über Kabel 71 durch eine Oeffnung 68 im Gehäuse 66 mit den entsprechenden Wicklungsabschnitten der Generatorwicklungen verbunden.

Es liegt im Rahmen der erfindungsgemässen Lösung, dass anstelle der gezeigten Dreiphasensysteme auch solche anderer Phasenzahl zur Anwendung kommen können.

### BEZUGSZEICHENLISTE

- 10,20: Generatorschaltung
- 11: Nullpunkt
- 12: Generatorwicklung
- 12a-c: Wicklungsabschnitt
- 13: Sternpunkt
- 14: Kabel-Doppelanschluss
- 15,..,17: Ueberspannungsschutzelement
- 18: Generatorschalter
- 19: Netz
- 21: Generatorwicklung
- 21 a-c: Wicklungsabschnitt
- 22: Generatorwicklung
- 22a-c: Wicklungsabschnitt
- 23: Generatorwicklung
- 23a-c: Wicklungsabschnitt
- 24a-c: Ueberspannungsschutzelement
- 25a-c: Ueberspannungsschutzelement
- 26a-c,27: Ueberspannungsschutzelement
- 28,33: Ueberspannungsschutzelement (Ueberspannungsableiter)
- 29,39: Kabelkupplung
- 30,30': Kabel
- 31: halbleitender Belag
- 32: Innenleiter
- 34,35: Kabelanschluss
- 36,37,40: Innenleiter
- 38: halbleitender Belag
- 41: Generator
- 42: Gehäuse (zylinderförmig)
- 43: Ableiterbox
- 44: Deckel
- 45: Kabelmuffe
- 46,47: Kabel
- 48,..,50: Generatorableitung
- 51: Generator
- 52: Rahmengehäuse
- 53: Welle
- 54: Rotor
- 55,56: Lagerbock
- 57: Stator
- 58,59: Wickelkopf
- 60,61: Kühler
- 62: Ueberspannungsschutzelementmodul
- 63: Ueberspannungsschutzelement
- 64: Generator
- 65: Lagerbock
- 66: Gehäuse (Generator)
- 67: Anbau
- 68,72,..,74: Oeffnung
- 69: Ueberspannungsschutzelement
- 70,71: Kabel

## Patentansprüche

1. Generator (41, 51, 64) zur Erzeugung hoher Spannungen, der wenigstens eine Generatorwicklung (12; 21,..,23) umfasst und über eine Generatorschaltung (10, 20) an ein Netz (19) angeschlossen ist, die Mittel (15,..,17; 24a-c; 25a-c; 26a-c; 27, 28, 33, 63, 69) zum Schutz gegen Ueberspannungen umfasst, **dadurch gekennzeichnet, dass** die wenigstens eine Generatorwicklung (12; 21,..,23) in eine Mehrzahl von Wicklungsabschnitten (12a-c; 21a-c, 22a-c, 23a-c) unterteilt ist, welche hinsichtlich der Isolationsbemessung ihrer Wicklungsisolation abgestuft ausgebildet sind, und dass die Ueberspannungsschutzmittel eine Mehrzahl von Ueberspannungsschutzelementen (15,..17; 24a-c, 25a-c, 26a-c; 28, 33, 63, 69) umfassen, die jeweils den einzelnen Wicklungsabschnitten (12a-c; 21a-c, 22a-c, 23a-c) zugeordnet sind und in ihrem Ansprechniveau an die Anforderungen des zugehörigen Wicklungsabschnittes angepasst sind.

2. Generator nach Anspruch 1, **dadurch gekennzeichnet, dass** erste Ueberspannungsschutzelemente (15,16; 24a,b, 25a,b, 26a,b; 33) an den Verbindungsstellen zwischen den Wicklungsabschnitten (12a-c; 21a-c, 22a-c, 23a-c) angeschlossen sind, und dass zweite Ueberspannungsschutzelemente (17; 24c, 25c, 26c) am auf Hochspannungspotential liegenden Ende der Generatorwicklung (12; 21, 22, 23) angeschlossen sind.

3. Generator nach einem der Ansprüche 1 und 2, **dadurch gekennzeichnet, dass** die wenigstens eine Generatorwicklung (12; 21, 22, 23) in n (n ≥ 2) Wicklungsabschnitte (12a-c; 21a-c, 22a-c, 23a-c) ungefähr gleicher Grösse unterteilt ist, dass n Ueberspannungsschutzelemente (15,..17; 24a-c, 25a-c, 26a-c; 28, 33, 63, 69) vorgesehen sind, und dass die n Ueberspannungsschutzelemente (15,..17; 24a-c, 25a-c, 26a-c; 28, 33, 63, 69) ein entsprechend abgestuftes Ansprechniveau aufweisen.

4. Generator nach Anspruch 3, **dadurch gekennzeichnet, dass** der Schutzpegel der Generatorwicklung (12; 21, 22, 23) etwa das 2-3fache der Nennspannung einer Generatorwicklung beträgt, dass die Generatorwicklung (12; 21, 22, 23) in drei gleichartige Wicklungsabschnitte (12a-c; 21a-c, 22a-c, 23a-c) unterteilt ist, und dass die Ansprechniveaus der Ueberspannungsschutzelemente (15,..17; 24a-c, 25a-c, 26a-c; 28, 33, 63, 69) 1/3, 2/3 und 3/3 des Schutzpegels der Generatorwicklung (12; 21, 22, 23) betragen.

5. Generator nach einem der Ansprüche 1 bis 4, **dadurch gekennzeichnet, dass** mehrere Generatorwicklungen (21, 22, 23) in einem ungeerdeten Sternpunkt (13) zusammengeschaltet sind, dass jede der Generatorwicklungen (21, 22, 23) in Wicklungsabschnitte (21a-c, 22a-c, 23a-c) unterteilt ist, dass jedem der Wicklungsabschnitte (21a-c, 22a-c, 23a-c) ein angepasstes Ueberspannungsschutzelement (24a-c, 25a-c, 26a-c) zugeordnet ist, und dass an den Sternpunkt (13) ein weiteres Ueberspannungsschutzelement (27) angeschlossen ist.

6. Generator nach einem der Ansprüche 1 bis 5, **dadurch gekennzeichnet, dass** die Ueberspannungsschutzelemente (15,..17; 24a-c, 25a-c, 26a-c; 27, 28, 33, 63, 69) als Ueberspannungsableiter ausgebildet und über eine integrierte Kabelkupplung (29, 39) an den zugehörigen Wicklungsabschnitt angeschlossen sind.

7. Generator nach Anspruch 6, **dadurch gekennzeichnet, dass** die Ueberspannungsschutzelemente, welche an den Verbindungspunkten zwischen zwei Wicklungsabschnitten angeschlossen werden, einen Kabel-Doppelanschluss (14) aufweisen.

8. Generator nach einem der Ansprüche 1 bis 7, **dadurch gekennzeichnet, dass** der Generator (41) ein zylinderförmiges Gehäuse (42) aufweist, und dass die Ueberspannungsschutzelemente (24a-c; 25a-c, 26a-c, 27) in einer separaten Ableiterbox (43) oberhalb des Gehäuses (42) untergebracht sind.

9. Generator nach einem der Ansprüche 1 bis 7, **dadurch gekennzeichnet, dass** der Generator (51) ein rechteckiges Rahmengehäuse (52) aufweist, und dass die Ueberspannungsschutzelemente (63) in einem Ueberspannungsschutzelementmodul (62) zusammengefasst und in dem Rahmengehäuse (52) untergebracht sind.

10. Generator nach einem der Ansprüche 1 bis 7, **dadurch gekennzeichnet, dass** die Ueberspannungsschutzelemente (69) in einem separaten Anbau (67) neben dem Generator (64) untergebracht sind.

11. Generator nach Anspruch 6, **dadurch gekennzeichnet, dass** die Kabelkupplungen (29, 39) und die Ueberspannungsableiter als Einzelkomponenten montiert und durch luftisolierte Verbindungselemente zusammengeschlossen sind.
